**Europäisches Patentamt**

**European Patent Office**

**Office européen des brevets**

(11) Veröffentlichungsnummer: **0 352 422**
**A2**

## (12) EUROPÄISCHE PATENTANMELDUNG

(21) Anmeldenummer: **89108648.0**

(51) Int. Cl.⁴: **G11B 5/706**

(22) Anmeldetag: **13.05.89**

(30) Priorität: **25.07.88 DE 3825203**

(43) Veröffentlichungstag der Anmeldung:
**31.01.90 Patentblatt 90/05**

(84) Benannte Vertragsstaaten:
**BE DE ES FR GB IT NL**

(71) Anmelder: **Degussa Aktiengesellschaft**
**Weissfrauenstrasse 9**
**D-6000 Frankfurt am Main 1(DE)**

(72) Erfinder: **Speer, Dietrich, Dr.**
**Grünaustrasse 5**
**D-6450 Hanau 9(DE)**
Erfinder: **Halbritter, Günter**
**In der Gartel 41**
**D-6458 Rodenbach(DE)**
Erfinder: **Kleinschmit, Peter, Dr.**
**Wildaustrasse 19**
**D-6450 Hanau 9(DE)**

(54) **Verfahren zur Herstellung von feinteiligen Erdalkali-und Bleiferriten für Datenträger.**

(57) Zur Herstellung von plättchenförmigen Erdalkali- und Bleiferriten für Datenträger kann man auch von unreinen Ausgangssubstanzen ausgehen, wenn man diese mit einer schmelzflüssigen basischen Alkaliverbindung aufschließt und den nach dem Auflösen in Wasser abgetrennten Precurser 0,5 bis 6 Stunden 600 bis 950° C tempert.

EP 0 352 422 A2

## Verfahren zur Herstellung von Erdalkali- und Bleiferriten für Datenträger

Die Erfindung betrifft ein Verfahren zur Herstellung von plättchenförmigen, feinteiligen, dotierten Erdalkali- und Bleiferriten für Datenträger aus Rohferriten oder unreinen keramischen Rohstoffen durch Auflösung der Ausgangssubstanzen und Temperung des erhaltenen Precursers.

Gegenüber anderen Magnetpigmenten wie z.B. Chromdioxid und Eisenoxid besitzen dotierte Erdalkali- und Bleiferrite unter anderem Vorteile hinsichtlich der Temperatur- und Feuchtigkeitsbeständigkeit und Aufzeichnungsdichte bzw. Datendichte pro cm². Die guten magnetischen Eigenschaften werden durch die hexagonale plättchenförmige Gestalt, die Feinteiligkeit und durch die Dotierung mit anderen Metallionen erreicht.

Bei den üblichen Herstellungsverfahren für Ferrite aus keramischen Rohstoffen, z.B. Eisenoxid, Erdalkalioxid oder -Carbonat) durch Sintern der Gemische bei hohen Temperaturen entstehenden Rohferrite (Produkte) weisen große Kristallite auf, die außerdem stark miteinander verwachsen sind. Als Datenträger sind solche Ferrite ungeeignet.

Für Datenträger geeignete Bariumferrite wurden bisher entweder durch Aufschmelzen der Ausgangsoxide in Boratgläsern bei sehr hohen Temperaturen, anschließendem Tempern des Glases und Herauslösen der Ferritkristallite mit Säuren gewonnen (JP-PS 86/236104) oder aber durch Fällung von Hydroxiden aus reinen Chlorid- oder Nitratlösungen der beteiligten Elemente und Behandlung der alkalischen Lösung im Autoklaven erhalten (JP-PS 86/295236). In der EP-OS 186603 wird Bariumhydroxidoctahydrat mit Natriumferrit als Ausgangsstoffe für eine Autoklavenbehandlung eingesetzt.

Es war daher Aufgabe der vorliegenden Erfindung, ein Verfahren zur Herstellung von plättchenförmigen, feinteiligen, dotierten Erdalkali- und Bleiferriten als Datenträger aus Rohferriten oder unreinen keramischen Rohstoffen durch Auflösung der Ausgangssubstanzen und Temperung des erhaltenen Precursers zu entwickeln, bei denen trotz Einsatz von unreinen, billigen Ausgangsstoffen ein für Datenträger sehr gut geeignetes Produkt definierter Zusammensetzung (Dotierung) gewonnen werden kann.

Diese Aufgabe wird erfindungsgemäß dadurch gelöst, daß das Auflösen der Ausgangssubstanzen durch einen Aufschluß mit schmelzflüssigen basischen Alkaliverbindungen im Überschuß erfolgt und der nach dem Auflösen der Schmelze in Wasser erhaltene Precurser nach dem Abfiltrieren 0,5 bis 6 Stunden bei Temperaturen zwischen 600 und 950° C getempert wird.

Vorzugsweise verwendet man für den Aufschluß Natriumhydroxid bei Temperaturen oberhalb 320° C und hält die Schmelze bis zu 24 Stunden auf Temperaturen oberhalb 200° C.

Weiterhin ist es vorteilhaft, die nach dem Auflösen der Schmelze in Wasser erhaltene Suspension einer Autoklavenbehandlung bei 120 bis 400° C während 2 bis 6 Stunden zu unterziehen.

Mit diesem Verfahren lassen sich Ferrite der allgemeinen Formel : $AFe_{12-x-y}M_xSn_yO_{19}$ herstellen, mit

A = Ba, Sr. Ca und/oder Pb,
M = Mn, Co, Cu, Zn, Ni, In, Cr, Ti, Ge, Zr, V, Nb, Ta, Mo und/oder W
x = 0 bis 3
y = 0 bis 1

Man erhält plättchenförmige, feinteilige Kristallite im Größenbereich bis 1 μm.

Folgende Beispiele sollen das erfindungsgemäße Verfahren näher erläutern:

1. 100 g eines Rohferrits der Formel: $Ba Fe_{11} Co_{0,5} Ti_{0,5} O_{19}$ werden mit 500 g Natriumhydroxid bei 800° C aufgeschmolzen und 6 Stunden bei 500° C getempert. Die Schmelze wird in Wasser gelöst, der Ferrit-Precurser, der aus Agglomeraten von scheibchenförmigen Kristalliten mit einem Durchmesser von ca. 0,0035 μm besteht, abfiltriert und 1 Stunde bei 900° geglüht. Die entstandenen hexagonalen Bariumferritkristalle besitzen einen Durchmesser von unter 1 um und ein Durchmesser-Dickenverhältnis von größer 6.

2. Das gleiche Produkt wie in Beispiel 1 erhält man, wenn man nicht von Rohferrit ausgeht, sondern einem Gemisch aus 79 g $Fe_2O_3$, 17,76 g $BaCO_3$, 3,61 g $CO_3O_4$ und 3,59 g $TiO_2$ und dieses Gemisch gemäß Beispiel 1 behandelt. Die Ausgangsprodukte hatten hierbei nur eine technische Reinheit. Das $Fe_2O_3$ enthielt z.B. etwa 5 % Verunreinigungen.

3. Eine Schmelze gemäß Beispiel 1 wird in Wasser gelöst und die erhaltene Suspension 6 Stunden bei 190° C in einem Autoklaven behandelt. Der Partikeldurchmesser des Ferrit-Precursers betrug dann ca. 0,0075 μm. Nach zweistündigem Tempern bei 900° C besaßen die Bariumferritkristalle einen Durchmesser von etwa 1 μm und ein Durchmesser-Dickenverhältnis größer 6.

4. Eine Schmelze gemäß Beispiel 1 oder 2 wird 6 Stunden bei 320° C getempert. Auch hier betrug die Partikelgröße des Ferrit-Precursers etwa 0,0035 μm.

5. 100 g unreiner Strontiumferrit der Zusammensetzung $SrFe_{11}O_{19}$ oder das dieser Zusammensetzung entsprechende Gemenge aus 13,9 g $SrCO_3$ und 90,24 g $Fe_2O_3$ wird mit 600 g Soda bei 1200° C geschmolzen, in 0,5 l Wasser gelöst und

bei 240° C im Autoklaven 6 Stunden lang behandelt. Der abgetrennte Ferrit-Precurser wird dann 6 Stunden bei 950° C getempert. Die entstandenen Strontiumferritkristalle besitzen einen Durchmesser von unter 1 μm.

Die auf diese Weise erhaltenen Erdalkaliferrite könnten alle für Datenträger verwendet werden.

**Ansprüche**

1. Verfahren zur Herstellung von plättchenförmigen, feinteiligen, dotiertern Erdalkali- und Bleiferriten für Datenträger aus Rohferriten oder unreinen keramischen Rohstoffen durch Auflösung der Ausgangssubstanzen und Temperung des erhaltenen Precursers,
dadurch gekennzeichnet,
daß das Auflösen der Ausgangssubstanzen durch einen Aufschluß mit schmelzflüssigen, basischen Alkaliverbindungen im Überschuß erfolgt, und der nach dem Auflösen der Schmelze in Wasser erhaltene Precurser nach dem Abfiltrieren 0,5 bis 6 Stunden bei Temperaturen zwischen 600 und 950° C getempert wird.

2. Verfahren nach Anspruch 1,
dadurch gekennzeichnet,
daß für den Aufschluß Natriumhydroxid bei Temperaturen oberhalb 320° C verwendet, und die Schmelze bis zu 24 Stunden auf Temperaturen oberhalb 200° C gehalten wird.

3. Verfahren nach Anspruch 1 und 2,
dadurch gekennzeichnet,
daß die nach dem Auflösen der Schmelze in Wasser erhaltene Suspension einer Autoklavenbehandlung bei 120 bis 400° C während 2 bis 6 Stunden unterzogen wird.